# EUROPÄISCHE PATENTANMELDUNG

(11) **EP 2 728 174 A1**
(43) Veröffentlichungstag der Anmeldung: **07.05.2014**
(21) Anmeldenummer: 12190597.0
(22) Anmeldetag: 30.10.2012
(51) Int. Cl.: F03D 3/04, F03D 3/00

(54) **Windkraftanlage zur Energiegewinnung**

(71) Anmelder: Anerdgy AG, 8001 Zürich (CH)
(72) Erfinder: Köhler, Sven, 8134 Adliswil (CH)
(74) Vertreter: Daub, Thomas

(57) **Zusammenfassung**

Die Erfindung betrifft eine Windkraftanlage (10, 10') zur Energiegewinnung für ein Dach (12, 12'), zumindest mit einer unter Wirkung eines Luftstroms betreibbaren Windradeinrichtung (14, 14'), mit einer durch die Windradeinrichtung (14, 14') angetriebenen Generatoreinrichtung (16, 16'), mit einer zumindest die Windradeinrichtung (14, 14') aufnehmenden Gehäuseeinheit (18, 18'), die einen der Windradeinrichtung (14, 14') vorgelagerten Einströmbereich (20, 20') zum Einströmen des Luftstroms aufweist, und mit einer in der Gehäuseeinheit (18, 18') angeordneten Windleiteinrichtung (22, 22').

Erfindungsgemäß bildet die Windleiteinrichtung (22) zumindest zwei Engstellen (22a, 22a', 22b, 22b', 22c, 22c') zur Erhöhung der Luftstromgeschwindigkeit aus.

## Beschreibung

### Stand der Technik

Die Erfindung betrifft eine Windkraftanlage zur Energiegewinnung nach dem Oberbegriff des unabhängigen Patentanspruchs 1.

Aus dem Stand der Technik sind unterschiedliche Ausführungen von Windkraftanlagen zur Energiegewinnung für ein Dach bekannt. Die Windkraftanlagen weisen eine Windradeinrichtung mit einer Generatoreinrichtung auf, welche innerhalb oder außerhalb des Windrads angeordnet sein können. Solche Windkraftanlagen können auf verschiedenen Arten auf Dächern von Gebäuden aufgestellt und zur Energieerzeugung genutzt werden. Bei einem Giebeldach können die Windkraftanlagen entlang eines Dachfirstes, unterhalb eines Dachfirstes oder oberhalb eines Dachfirstes montiert werden, wobei die oberhalb des Dachfirstes montierten Windkraftanlagen entweder im Freien stehen oder unter einer Abdeckungskonstruktion geschützt angeordnet sein können. Zum Teil dient eine solche Abdeckungskonstruktion auch zum Leiten des Luftstroms zu einer Windkraftanlage. Die unterhalb einer Dachfläche angeordneten Windkraftanlagen müssen zum Einströmen des Luftstroms in der Dachkonstruktion einen Einströmbereich und einen Ausströmbereich aufweisen. Der konstruktive Aufwand derartiger Windkraftanlagen oder die Installation der Windkraftanlagen als eigenständige bauliche Einheiten ist teilweise enorm und dadurch sehr kostenintensiv, da ein Großteil des Dachaufbaus Bestandteil der Windkraftanlage ist.

Aus der DE 10 2007 035 928 A1 ist eine Windkraftanlage zur Energiegewinnung für ein Dach bekannt. Die Windkraftanlage umfasst zumindest eine unter Wirkung eines Luftstroms betreibbare Windradeinrichtung, eine durch die Windradeinrichtung angetriebene Generatoreinrichtung, eine zumindest die Windradeinrichtung aufnehmende Gehäuseeinheit, die einen der Windradeinrichtung vorgelagerten Einströmbereich zum Einströmen des Luftstroms aufweist, und eine in der Gehäuseeinheit angeordnete Windleiteinrichtung. Die Windleiteinrichtung umfasst ein Leitblech, das eine Engstelle ausbildet und den Luftstrom unkontrolliert in die Windradeinrichtung leitet.

Der Erfindung liegt insbesondere die Aufgabe zugrunde, eine Windkraftanlage zur Energiegewinnung für ein Dach bereitzustellen, welche eine Verbesserung der Luftstromführung ermöglicht.

Die Aufgabe wird erfindungsgemäß durch eine Windkraftanlage zur Energiegewinnung für ein Dach gemäß Patentanspruch 1 gelöst, wobei weitere Ausgestaltungen der Erfindung den Ansprüchen 2 bis 16 entnommen werden können.

Die Erfindung geht aus von einer Windkraftanlage zur Energiegewinnung für ein Dach, zumindest mit einer unter Wirkung eines Luftstroms betreibbaren Windradeinrichtung, mit einer durch die Windradeinrichtung angetriebenen Generatoreinrichtung, mit einer zumindest die Windradeinrichtung aufnehmenden Gehäuseeinheit, die einen der Windradeinrichtung vorgelagerten Einströmbereich zum Einströmen des Luftstroms aufweist und mit einer in der Gehäuseeinheit angeordneten Windleiteinrichtung. Es wird vorgeschlagen, dass die Windleiteinrichtung zumindest zwei Engstellen zur Erhöhung der Luftstromgeschwindigkeit ausbildet.

Ein wesentlicher Vorteil der Erfindung besteht darin, dass die Windleiteinrichtung zumindest zwei Engstellen zur Erhöhung der Luftstromgeschwindigkeit ausbildet. In vorteilhafter Weise kann hierdurch der Wirkungsgrad der erfindungsgemäßen Windkraftanlage insbesondere bei niedrigen Luftstromgeschwindigkeiten deutlich erhöht werden. Mit zunehmender Erhöhung der Luftstromgeschwindigkeiten kann somit eine besonders wirtschaftliche Windkraftanlage bereitgestellt werden, welche durch ihre bauliche Integration an ein Gebäude sowohl einen eventuellen Schattenwurf als auch störende Schallemissionen vermeidet. Im Gegensatz zu herkömmlichen Ausführungen von Windkraftanlagen, bei welchen Teilbereiche der Dachkonstruktion angepasst werden müssen oder die Dachkonstruktion Bestandteil der Windkraftanlage ist, kann die erfindungsgemäße Windkraftanlage besonders schnell als ein kompaktes Modul auch nachträglich auf jedes Dach montiert werden. Auf Grund der wesentlichen Vereinfachung und der technischen Verbesserung der erfindungsgemäßen Windkraftanlage können die Herstellungskosten und die Montagekosten für die Windkraftanlage beträchtlich gesenkt werden. Hierdurch kann die Akzeptanz der Windkraftanlage auf Basis von Windströmungen in Siedlungsgebieten deutlich erhöht werden.

In einer vorteilhaften Ausgestaltung der Erfindung ist die Windleiteinrichtung in einem Einströmbereich und/oder einem Ausströmbereich der Gehäuseeinheit angeordnet. In vorteilhafter Weise sind dadurch mehrere Varianten der erfindungsgemäßen Windkraftanlage herstellbar.

In einer Ausgestaltung der Windkraftanlage weist die Windleiteinrichtung eine Strömungsumlenkeinrichtung auf, die den Einströmbereich oder den Ausströmbereich in die zwei Engstellen teilt. In vorteilhafter Weise kann hierdurch der einströmende Luftstrom beschleunigt in eine definierte Richtung gelenkt werden und so in einem optimalen Winkel auf die Windradeinrichtung auftreffen. Durch die Anordnung der Strömungsumlenkeinrichtung nach der Engstelle der Windleiteinrichtung entstehen die zwei Engstellen vor oder nach der Windradeinrichtung, wodurch zwangsläufig eine weitere Erhöhung der Luftstromgeschwindigkeit in dem Einströmbereich oder dem Ausströmbereich entstehen kann. Durch konstruktive Optimierung der Ausführungsform der Strömungsumlenkeinrichtung kann der Wirkungsgrad der erfindungsgemäßen Windkraftanlage zusätzlich beeinflusst und verbessert werden. Unter "teilen" soll dabei insbesondere verstanden werden, dass in Bezug auf den Luftstrom die beiden Engstellen parallel zueinander angeordnet sind, wodurch ein Teil des Luftstroms durch die eine Engstelle und ein Teil des Luftstroms durch die andere Engstelle strömt.

In einer weiteren Ausgestaltung der Windkraftanlage weist die Gehäuseeinheit im Einströmbereich einen sich in Strömungsrichtung verkleinernden Ouerschnitt auf, der eine dritte Engstelle ausbildet, die entlang der Strömungsrichtung vor den zwei Engstellen angeordnet ist, welche durch die den Einströmbereich oder den Ausströmbereich teilende Strömungsumlenkeinrichtung ausgebildet sind. Hierdurch kann ein Bauteil der Gehäuseeinheit sowohl als ein nach außen begrenzendes Bauteil eingesetzt werden als auch eine Funktion einer Strömungsumlenkeinrichtung für einen einströmenden Luftstrom aufweisen. In vorteilhafter Weise kann hierdurch der einströmende Luftstrom verdichtet und gezielt auf eine definierte Stelle der Windradeinrichtung geleitet werden, wobei in vorteilhafter Weise auf Grund des verkleinernden Ouerschnitts eine Erhöhung der Luftstromgeschwindigkeit und somit eine wesentliche Verbesserung des Wirkungsgrades der Windkraftanlage erzielt werden kann.

In einer weiteren Ausgestaltung der Windkraftanlage ist die Windleiteinrichtung in zumindest einer der Engstellen im Einströmbereich und/oder Ausströmbereich zur Umlenkung des Luftstroms um einen Winkel von zumindest 70 Grad vorgesehen. Hierdurch kann ein bestmöglicher Auftreffwinkel des Luftstroms auf die Windradeinrichtung eingestellt und gewährleistet werden, wodurch ein besonders optimaler Wirkungsgrad der Windkraftanlage bereits allein durch die geometrische Ausgestaltung und Anordnung der Windleiteinrichtung sichergestellt werden kann. Vorteilhafterweise wird der Luftstrom um einen Winkel von zumindest 80 Grad umgelenkt. Besonders bevorzugt liegt der Winkel, um den der Luftstrom umgelegt wird, in einem Bereich zwischen 85 Grad und 95 Grad. Als ein "Winkel" soll dabei insbesondere ein Winkel verstanden, um den sich eine mittlere Strömungsrichtung vor der Engstelle von einer mittleren Strömungsrichtung nach der Engstelle unterscheidet. Vorzugsweise ist eine Wandung in einem Bereich unmittelbar vor der Engstelle unter diesem Winkel zu einer Wandung unmittelbar nach der Engstelle angeordnet, wobei die Wandungen die mittlere Strömungsrichtung des Luftstroms definieren.

In einer weiteren Ausgestaltung der Erfindung ist die Windleiteinrichtung dazu vorgesehen, bei einer externen Luftstromgeschwindigkeit größer als 10 m/s einen turbulenten Luftstrom und/oder bei einer externen Luftstromgeschwindigkeit kleiner als 5 m/s einen nahezu laminaren Luftstrom im Einströmbereich zu bewirken. In vorteilhafter Weise kann hierdurch die Windkraftanlage unabhängig von der Luftstromgeschwindigkeit effektiv zur Energiegewinnung genutzt werden.

Es wird ein im Einströmbereich angeordnetes Gitter vorgeschlagen, das zumindest zur Verwirbelung des Luftstroms bei einer externen Luftstromgeschwindigkeit größer als 10 m/s vorgesehen ist. Da bei einer solchen Ausgestaltung die Windkraftanlage ohne Bremse ausgestaltet werden kann, kann hierdurch auf eine besonders einfache und kostengünstige Art die Luftstromgeschwindigkeit eines mit hoher Geschwindigkeit einströmenden Luftstroms reduziert und die Windradeinrichtung vor Überlastung geschützt werden. Ein weiterer Vorteil des Gitters ist der Schutz der Windkraftanlage vor herumfliegenden Partikeln und eine Gewährleistung für eine permanente Winddurchlässigkeit, wodurch stets eine Betriebsbereitschaft der Windkraftanlage sichergestellt werden kann.

In einer Ausgestaltung der Windkraftanlage weist die Gehäuseeinheit einen Deckel und die Windleiteinrichtung eine Strömungsumlenkeinrichtung auf, die in den Deckel integriert ist und den im Einströmbereich sich in Strömungsrichtung verkleinernden Ouerschnitt ausbildet. In vorteilhafter Weise erfüllt die Gehäuseeinheit neben der Funktion einer sicheren Abdeckung gleichzeitig die Funktion einer widerstandsarmen Strömungsumlenkeinrichtung für die Windkraftanlage. Hierzu kann der gewichtssparende Deckel besonders kostengünstig mit einer aerodynamischen Form hergestellt werden. Besonders vorteilhaft ist, dass der Deckel und/oder die Windleiteinrichtung nach der Montage eine wind- und wetterfeste Ausführung bzw. Konstruktion aufweisen.

In einer weiteren Ausgestaltung der Windkraftanlage weist die Gehäuseeinheit eine Bodenplatte und die Windleiteinrichtung eine Strömungsumlenkeinrichtung auf, die an der Bodenplatte der Gehäuseeinheit angeordnet ist. In vorteilhafter Weise kann auf einer Ebene eines Bauteils die Gehäuseeinheit und die Strömungsumlenkeinrichtung der Windleiteinrichtung montiert und dadurch eine einfache Montage der Windkraftanlage auf einem Dach ermöglicht werden.

In vorteilhafter Ausgestaltung der Erfindung weist die Windradeinrichtung eine quer zu einer Strömungsrichtung angeordnete Achseinheit, zwei Lagerstellen zur Lagerung der Achseinheit und eine von der Gehäuseeinheit getrennt ausgeführten Ständereinheit auf, an der die Lagerstellen angeordnet sind. In vorteilhafter Weise kann hierdurch die Windradeinrichtung in einer definierten Position mit der Ständereinheit der Windradeinrichtung befestigt und besonders zuverlässig und stabil gelagert werden, wodurch die Betriebssicherheit der Windkraftanlage langfristig sichergestellt werden kann. Besonders vorteilhaft ist, dass sowohl die Montage als auch die Demontage der Windradeinrichtung durch die von außen zugänglich angeordneten Lagerstellen erleichtert werden kann, indem eine von der Gehäuseeinheit getrennt ausgeführten Ständereinheit zur Aufnahme der Lagerstellen vorgesehen ist. Ein weiterer wesentlicher Vorteil der getrennt ausgeführten Ständereinheit ist die Möglichkeit der Einstellbarkeit der Windradeinrichtung über die Ständereinheit, wodurch beispielsweise bei Wartungsarbeiten oder Reparaturarbeiten an der Windkraftanlage die Windradeinrichtung wieder exakt eingestellt werden kann.

In einer Ausgestaltung der Windkraftanlage ist die Ständereinheit fest mit der Bodenplatte verbunden. In vorteilhafter Weise kann hierdurch die Windradeinrichtung besonders stabil auf der Bodenplatte gelagert werden. Besonders vorteilhaft ist, dass hierdurch eine Befestigung der Windkraftanlage auf dem Dach eines Gebäudes wesentlich vereinfacht werden kann, da die Ständereinheit mit der Bodenplatte vormontiert werden kann.

In einer Ausgestaltung der Windkraftanlage ist die Ständereinheit innerhalb eines von dem Deckel umspannten Raums angeordnet. Hierdurch kann beim Dachdecken eine auf dem Dach eines Gebäudes montierte Windkraftanlage besonders einfach integriert werden, da die rechteckige Bodenplatte der Windkraftanlage keinen Überstand aufweist.

In einer weiteren Ausgestaltung der Windkraftanlage weist die Gehäuseeinheit eine Lagereinheit auf, durch die der Deckel schwenkbar mit der Bodenplatte verbunden ist. In vorteilhafter Weise kann hierdurch ein wiederverschließbarer Zugang in den Innenbereich der Windkraftanlage ermöglicht werden. Die Gehäuseeinheit kann mit wenigen Handgriffen geöffnet oder geschlossen werden, wie beispielsweise bei der Montage bzw. Demontage der Windkraftanlage, oder im aufgebauten Zustand der Windkraftanlage für Wartungsarbeiten bzw. für Reparaturarbeiten.

In einer weiteren Ausgestaltung weist die Windkraftanlage ein elektrisches Kabel zur Anbindung an die Generatoreinrichtung auf, wobei die Achseinheit der Windradeinrichtung zumindest teilweise als rohrförmiger Hohlkörper ausgeführt ist, der das Kabel zumindest teilweise aufnimmt. In vorteilhafter Weise kann das als elektrisches Übertragungsmittel ausgeführte Kabel besonders geschützt und platzsparend durch einen seitlichen Zugang der rohrförmigen Achseinheit in das Innere der Windradeinrichtung bis zur Generatoreinrichtung eingeführt werden. Hierbei kann eine zusätzliche Erleichterung der Montage und eine einfache Anbindung der Generatoreinrichtung ermöglicht werden, die eine besonders hohe Lebensdauer im Dauerbetrieb aufweisen kann.

In vorteilhafter Weise kann die Windradeinrichtung als Ossberger-Turbine ausgeführt werden. In vorteilhafter Weise weist die mit einer horizontalen Achseinheit ausgestattete Ossberger-Turbine einen sehr guten Wirkungsgrad auf und kann bei geringen Drehzahlen eine hohe Leistung erbringen. Die Ossberger-Turbine ist auf Grund der Einfachheit der Konstruktion im Vergleich zu anderen Turbinentypen besonders einfach in der Handhabung, insbesondere bei Wartungsarbeiten und Reparaturarbeiten. Zudem weist die Ossberger-Turbine einen selbstreinigenden Effekt auf, wodurch ein zuverlässiger und störungsfreier Betrieb der Windradeinrichtung gewährleistet werden kann. Ein weiterer Vorteil ergibt sich durch die Möglichkeit der Zusammenschaltung von mehreren Windradeinrichtungen auf einen Wechselrichter bzw. einen Gleichstromgenerator, wodurch eine sehr gute Ausnutzung der Platzverhältnisse und der Leistungsanforderungen möglich sein kann.

In besonders vorteilhafter Weise ist die Windkraftanlage als ein Verkleidungselement des Daches ausgeführt. In vorteilhafter Weise kann die Windkraftanlage bei einem Neubau in ein Dach ganz oder teilweise integriert oder nachträglich in ein Dach eingebaut werden. Da die erfindungsgemäße Windkraftanlage als eine kompakte geschlossene Montageeinheit mit einem in Farbe und Form der Dachkonstruktion oder Hauskonstruktion ansprechenden Design ausgeführt werden kann, kann die Windkraftanlage optisch besonders vorteilhaft ohne Schattenwurf und Schallemission auf ein Dach montiert werden. Bei einer Montage mehrerer Windkraftanlagen auf einem Dach kann die Materialmenge zur Einhausung reduziert werden. Hierdurch kann die Akzeptanz von Windkraftanlagen auf Dächern von Gebäuden deutlich erhöht werden.

### Zeichnungen

Weitere Vorteile ergeben sich aus der folgenden Zeichnungsbeschreibung. In den Zeichnungen ist sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Von gleichen Bauteilen in einer Figur ist nur jeweils ein Bauteil gekennzeichnet.

Es zeigen:
- Fig. 1: in einer perspektivischen Darstellung ein erstes Ausführungsbeispiel einer erfindungsgemäßen Windkraftanlage auf einem Dach, mit einer Windradeinrichtung, mit einer die Windradeinrichtung aufnehmenden Gehäuseeinheit, die einen der Windradeinrichtung vorgelagerten Einströmbereich bzw. einen der Windradeinrichtung nachgelagerten Ausströmbereich aufweist und mit einer in dem Einströmbereich der Gehäuseeinheit angeordneten Windleiteinrichtung,
- Fig. 2: in einer perspektivischen Schnittdarstellung einen Ausschnitt des ersten Ausführungsbeispiels der erfindungsgemäßen Windkraftanlage mit der Windradeinrichtung, mit der Gehäuseeinheit, mit dem Einströmbereich und mit drei von der Windleiteinrichtung ausgebildeten Engstellen,
- Fig. 3: in einer perspektivischen Darstellung das erste Ausführungsbeispiel der erfindungsgemäßen Windkraftanlage auf einem Dach mit einer Schnittdarstellung der Windradeinrichtung,
- Fig. 4: in einer perspektivischen Darstellung ein zweites Ausführungsbeispiel einer erfindungsgemäßen Windkraftanlage, mit einer Gehäuseeinheit und einer in einem Ausströmbereich der Gehäuseeinheit angeordneten Windleiteinrichtung, wobei die Gehäuseeinheit zur Seite hin offen dargestellt ist, und
- Fig. 5: in einer perspektivischen Darstellung die erfindungsgemäße Windkraftanlage aus Fig. 4, wobei die Gehäuseeinheit nach oben hin offen dargestellt ist.

### Beschreibung der Ausführungsbeispiele

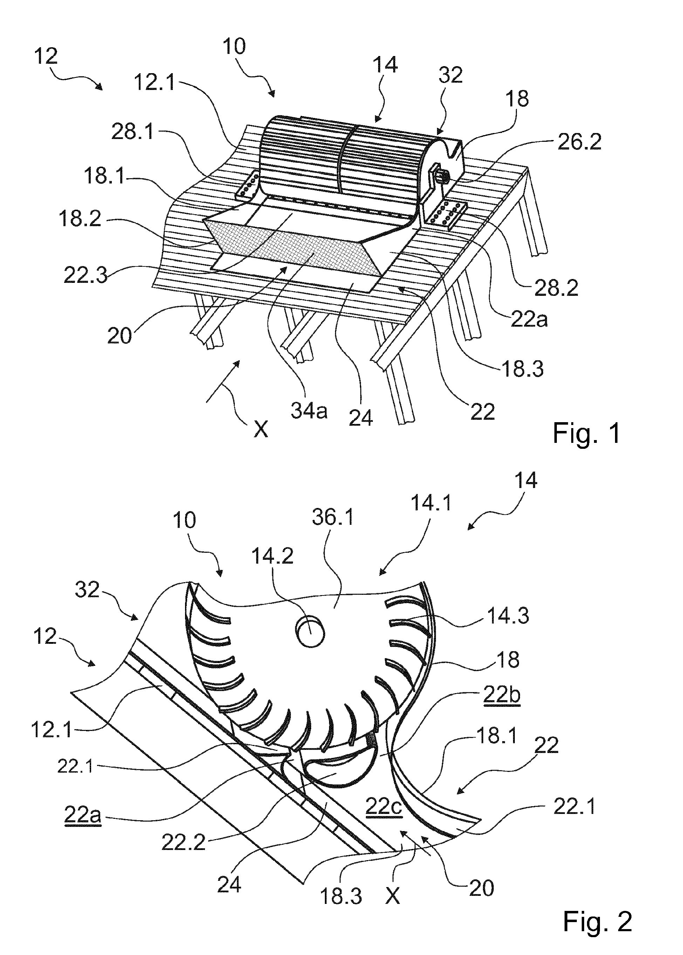

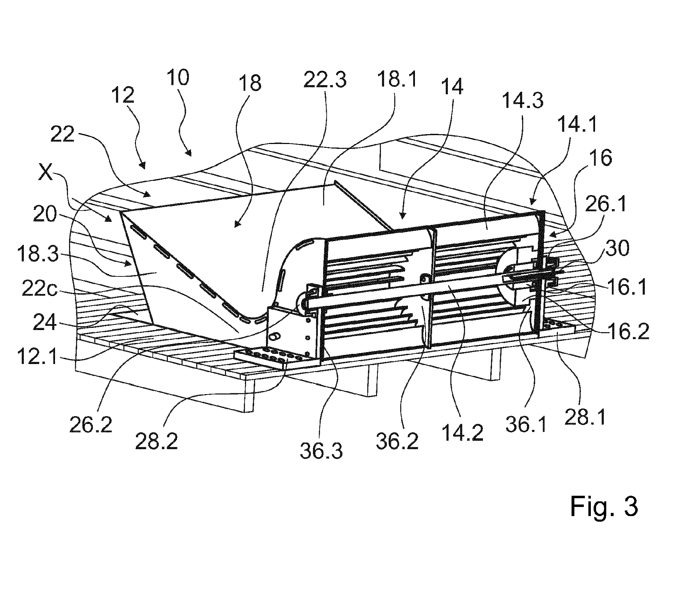

Die Fig. 1 bis 5 zeigen zwei Ausführungsbeispiele einer erfindungsgemäßen Windkraftanlage 10, 10' zur Energiegewinnung für ein Dach 12, 12', zumindest mit einer unter Wirkung eines Luftstroms betreibbaren Windradeinrichtung 14, 14'. Die Windkraftanlage 10, 10' umfasst eine durch die Windradeinrichtung 14, 14'angetriebene Generatoreinrichtung 16, 16', eine zumindest die Windradeinrichtung 14, 14' aufnehmende Gehäuseeinheit 18, 18', die einen der Windradeinrichtung 14, 14' vorgelagerten Einströmbereich 20, 20' zum Einströmen des Luftstroms aufweist und eine in der Gehäuseeinheit 18, 18' angeordnete Windleiteinrichtung 22, 22'. Zum Ausströmen des Luftstroms weist die Gehäuseeinheit 18, 18' einen der Windradeinrichtung 14, 14' nachgelagerten Ausströmbereich 32, 32' auf.

Die Windkraftanlage 10, 10' kann über unterschiedliche Montagearten auf einem Dach 12, 12' montiert werden, wie beispielsweise direkt auf einer Dachlattung 12.1, 12.1' des Dachs 12, 12' oder indirekt über eine Trägerkonstruktion auf das bereits gedeckte Dach 12, 12', ohne dass die Giebelhöhe erhöht werden muss. Selbstverständlich sind auch andere, einem Fachmann als sinnvoll erscheinende Bauten, bauliche Konstruktionen oder Gerüste denkbar, auf welchen die Windkraftanlage 10, 10' zur Energiegewinnung montiert werden kann. Im vorliegenden Ausführungsbeispiel ist eine Montage der Windkraftanlage 10, 10' auf einem Dach 12, 12' mit einer Ausrichtung der Windradeinrichtung 14, 14' parallel zum Dachfirst vorgesehen, so dass der Einströmbereich 20, 20' eine nach unten gerichtete Öffnung aufweist, wodurch die Windradeinrichtung 14, 14' durch den von unten in Strömungsrichtung X, X' bzw. vertikal zur Achse der Windradeinrichtung 14, 14' einströmenden Luftstrom angetrieben werden kann. Die dabei erzeugte Bewegungsenergie in der Windradeinrichtung 14, 14' kann durch Übertragung auf die Generatoreinrichtung 16, 16' in nutzbare elektrische Energie umgewandelt werden. Durch Installation mehrerer miteinander kombinierter Windradeinrichtungen 14, 14' kann eine sehr gute Ausnutzung der Platzverhältnisse auf einem Dach 12, 12' und eine besonders umweltfreundliche und leistungsstarke Windkraftanlage 10, 10' entstehen.

Der Wirkungsgrad von Windkraftanlagen 10, 10' ist innerhalb von Siedlungen deutlich vermindert, da Verwirbelungen, die durch bauliche Hindernisse im Bereich der Windkraftanlagen 10, 10' und die Nähe der Windkraftanlagen 10, 10' zum Boden erzeugt werden, den Wirkungsgrad negativ beeinflussen können. In vielen geografischen Gebieten ist eine niedrige Luftstromgeschwindigkeit bzw. Windgeschwindigkeit unter 5 m/s überproportional häufig vertreten. Dies hat zur Folge, dass herkömmliche Ausführungen von Windkraftanlagen 10, 10' nicht oder nur in geringem Umfang wirtschaftlich in solchen Gebieten betrieben werden können.

Um eine Windkraftanlage 10, 10' zur Energiegewinnung für ein Dach 12, 12' bereitzustellen, welche eine Optimierung/Verbesserung der Luftstromführung ermöglicht, wird erfindungsgemäß vorgeschlagen, dass die Windleiteinrichtung 22, 22' zumindest zwei Engstellen 22a, 22a', 22b, 22b', 22c, 22c' zur Erhöhung der Luftstromgeschwindigkeit ausbildet.

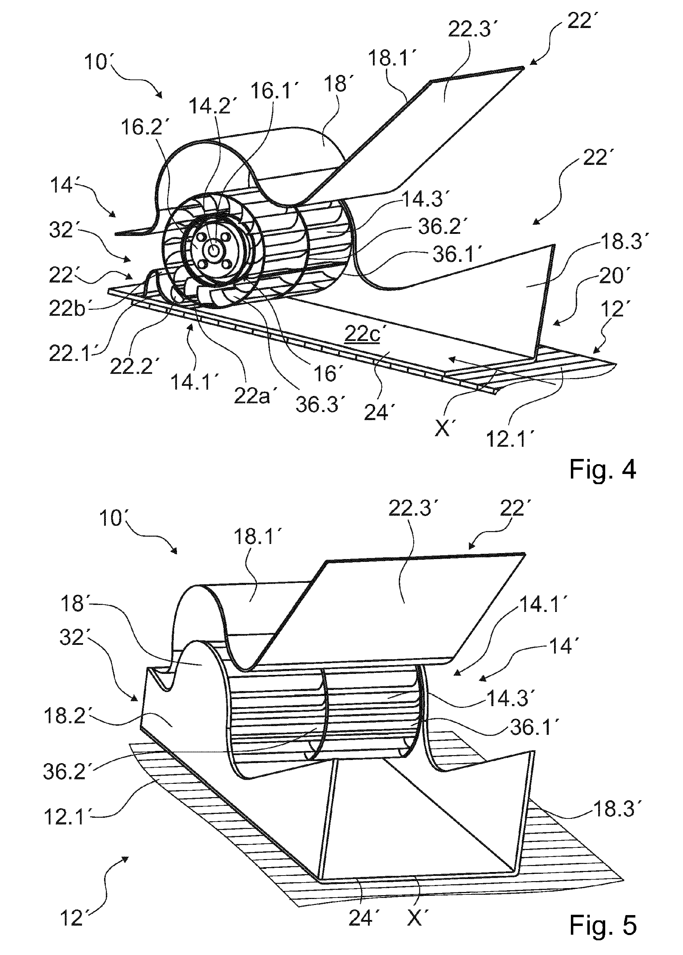

In den zwei Ausführungsbeispielen gemäß den Fig. 1 bis 5 kann die Windleiteinrichtung 22, 22' in einem Einströmbereich 20, 20' und/oder einem Ausströmbereich 32, 32' der Gehäuseeinheit 18, 18' angeordnet sein. Die Fig. 1 bis 3 zeigen das erste Ausführungsbeispiel der Windkraftanlage 10 mit der Windleiteinrichtung 22 im Einströmbereich 20 der Gehäuseeinheit 18 und die Fig. 4 und 5 zeigen das zweite Ausführungsbeispiel der Windkraftanlage 10' mit der Windleiteinrichtung 22' im Einströmbereich 20' und Ausströmbereich 32' der Gehäuseeinheit 18'. Alternativ ist auch eine Anordnung der Windleiteinrichtung 22, 22' nur im Ausströmbereich 32, 32' der Gehäuseeinheit 18, 18'denkbar.

Wie aus den Fig. 2 und 4 ersichtlich ist, weist die Windleiteinrichtung 22, 22' eine Strömungsumlenkeinrichtung 22.2, 22.2' auf, die den Einströmbereich 20, 20' oder den Ausströmbereich 32, 32' in die zwei Engstellen 22a, 22a', 22b, 22b' teilt. Die Strömungsumlenkeinrichtung 22.2, 22.2' ist als ein mondförmiger oder konkav-konvexer Hohlkörper ausgebildet und kann achsparallel zur Windradeinrichtung 14, 14' angeordnet und an Seitenwänden 18.2, 18.2', 18.3, 18.3' der Gehäuseeinheit 18, 18' befestigt werden, wodurch im Bereich der Engstellen 22a, 22a', 22b, 22b' der Luftstrom in die Windradeinrichtung 14, 14' ungehindert einströmen kann. Die erste Engstelle 22a, 22a' ist zwischen der Strömungsumlenkeinrichtung 22.2, 22.2' und dem Bodenbereich der Gehäuseeinheit 18, 18' und die zweite Engstelle 22b, 22b' ist zwischen der Strömungsumlenkeinrichtung 22.2, 22.2' und dem Deckelbereich der Gehäuseeinheit 18, 18' angeordnet. Vorzugsweise ist die Gehäuseeinheit 18, 18' aus faserverstärktem Kunststoff ausgebildet. Alternativ ist eine Ausbildung der Gehäuseeinheit 18, 18' auch aus Aluminiumblechen denkbar.

Die Gehäuseeinheit 18, 18' im Einströmbereich 20, 20' weist gemäß den Fig. 1 bis 5 einen sich in Strömungsrichtung X, X' verkleinernden Querschnitt auf, der eine dritte Engstelle 22c, 22c' ausbildet, die entlang der Strömungsrichtung X, X' vor den zwei Engstellen 22a, 22a', 22b, 22b' angeordnet ist, welche durch die den Einströmbereich 20, 20' oder den Ausströmbereich 32, 32' teilende Strömungsumlenkeinrichtung 22.2, 22.2' ausgebildet sind. Das freie Ende des Einströmbereichs 20, 20' weist einen großen rechteckigen Ouerschnitt auf und verjüngt sich allmählich in Strömungsrichtung X, X'. In einem Übergangsbereich zur Windradeinrichtung 14, 14' weist der Einströmbereich 20, 20' eine Engstelle 22c, 22c' mit einem kleinen rechteckigen Querschnitt auf. Im allmählich verengenden Einströmbereich 20, 20', in welchem der einströmende Luftstrom kanalisiert und zunehmend verdichtet wird, kann der einströmende Luftstrom kontinuierlich verdichtet und erheblich beschleunigt werden.

In vorteilhafter Weise kann die Windradeinrichtung 14, 14' als Ossberger-Turbine ausgeführt sein. Die Windradeinrichtung 14, 14' weist in den vorliegenden Ausführungsbeispielen ein walzenförmiges Laufrad 14.1, 14.1' mit einer drehfest angeordneten Achseinheit 14.2, 14.2' auf, auf welcher drehbar angeordnete Blattaufnahmescheiben 36.1, 36.1', 36.2, 36.2', 36.3, 36.3' gelagert sind. Im Bereich des Außenumfangs der Blattaufnahmescheiben 36.1, 36.1', 36.2, 36.2', 36.3, 36.3' sind zahlreiche, radial oder tangential angeordnete Blätter 14.3, 14.3' des Laufrads 14.1, 14.1' mit den Blattaufnahmescheiben 36.1, 36.1', 36.2, 36.2', 36.3, 36.3' fest verbunden. Auf Grund der unterschiedlichen Anordnungen der Windleiteinrichtung 22, 22' in den beiden Ausführungsbeispielen, sind die Blätter 14.3, 14.3' des Laufrads 14.1, 14.1' in den beiden Ausführungsbeispielen gegensätzlich ausgerichtet. Im ersten Ausführungsbeispiel gemäß den Fig. 1 bis 3 dreht sich das Laufrad 14.1 der Windradeinrichtung 14 gegen den Uhrzeigersinn und im zweiten Ausführungsbeispiel gemäß den Fig. 4 und 5 dreht sich das Laufrad 14.1' der Windradeinrichtung 14' im Uhrzeigersinn.

Um einen optimalen Auftreffwinkel des Luftstroms auf die Blätter 14.3, 14.3' der Windradeinrichtung 14, 14' einzustellen ist die Windleiteinrichtung 22, 22' in zumindest einer der Engstellen 22a, 22a', 22b, 22b' im Einströmbereich 20, 20' oder Ausströmbereich 32, 32' zur Umlenkung des Luftstroms um einen Winkel von zumindest 80 Grad vorgesehen. Die beiden Engstellen 22a, 22a', 22b, 22b' weisen gegenüber der dritten Engstelle 22c, 22c' eine wesentlich größere Verengung auf. Vorzugsweise ist in den beiden Engstellen 22a, 22a', 22b, 22b' eine Umlenkung des Luftstroms um ca. 90 Grad vorgesehen, wodurch der beschleunigte Luftstrom senkrecht auf die Blätter 14.3, 14.3' der Windradeinrichtung 14, 14' auftrifft und somit eine große kinetische Energie auf das Laufrad 14.1, 14.1' übertragen bzw. ein hohes Drehmoment erzeugen kann.

In vorteilhafter Weise ist die Windleiteinrichtung 22, 22' dazu vorgesehen, bei einer externen Luftstromgeschwindigkeit größer als 10 m/s einen turbulenten Luftstrom und/oder bei einer externen Luftstromgeschwindigkeit kleiner als 5 m/s einen nahezu laminaren Luftstrom im Einströmbereich 20, 20' zu bewirken. Bei hohen externen Luftstromgeschwindigkeiten kann dadurch die Windradeinrichtung 14, 14' abgebremst werden. Somit kann die Windkraftanlage 10, 10' vor Überlastung geschützt werden.

In einer Ausgestaltung umfasst die Windkraftanlage 10, 10' ein im Einströmbereich 20, 20' angeordnetes Gitter 34a, das zumindest zur Verwirbelung des Luftstroms bei einer externen Luftstromgeschwindigkeit größer als 10 m/s vorgesehen ist. Dadurch kann die hohe Luftstromgeschwindigkeit auf eine konstruktiv besonders einfache Weise reduziert und die Windradeinrichtung 14, 14' vor Überlastung geschützt werden. Das dem Einströmbereich 20, 20' vorgelagerte Gitter 34a bildet zudem ein Insektenschutzgitter aus. Als weiterer Schutz vor Betriebsstörungen ist dem Ausströmbereich 32, 32' ein nicht näher dargestelltes Laubschutzgitter nachgelagert.

Wie aus den Fig. 1 bis 5 ersichtlich ist, weist die Gehäuseeinheit 18, 18' einen Deckel 18.1, 18.1' und die Windleiteinrichtung 22, 22' eine Strömungsumlenkeinrichtung 22.3, 22.3' auf, die in den Deckel 18.1, 18.1' integriert ist und den im Einströmbereich 20, 20' sich in Strömungsrichtung X, X' verkleinernden Querschnitt ausbildet. Die Gehäuseeinheit 18, 18' kann einteilig oder wie in den vorliegenden Ausführungsbeispielen mehrteilig ausgeführt sein, wobei der Deckel 18.1, 18.1' ebenfalls mehrteilig ausgebildet sein kann. Der als Abdeckung ausgeführte Deckel 18.1, 18.1' der Gehäuseeinheit 18, 18' ist in einem Anfangsbereich plan ausgebildet und weist in einem Endbereich eine gebogene Form auf. Auf Grund der glatten Oberfläche des Deckels 18.1, 18.1' kann der Luftstrom im Einströmbereich 20, 20' besonders widerstandsarm bzw. mit einer hohen Luftstromgeschwindigkeit durch die Windleiteinrichtung 22, 22' geleitet werden. Durch eine optimale Ausgestaltung der Deckelgeometrie kann eine besonders wirtschaftliche Windkraftanlage 10, 10' mit einem hohen Wirkungsgrad erzielt werden.

Als Basis für die Windkraftanlage 10, 10' weist die Gehäuseeinheit 18, 18' eine Bodenplatte 24, 24' und die Windleiteinrichtung 22, 22' eine Strömungsumlenkeinrichtung 22.1, 22.1' auf, die an der Bodenplatte 24, 24' der Gehäuseeinheit 18, 18' angeordnet ist. Die Bodenplatte 24, 24' ist als verwindungssteifes Bauteil ausgeführt und dient als Trägerplatte der Windkraftanlage 10, 10', über welche die Windkraftanlage 10, 10' auf dem Dach 12, 12' befestigt werden kann. Die Strömungsumlenkeinrichtung 22.1, 22.1' kann aus einer Metallplatte hergestellt und mit Nieten oder durch Schweißen auf der Bodenplatte 24, 24' befestigt werden. Die vorzugsweise besonders leichte Strömungsumlenkeinrichtung 22.1, 22.1' erstreckt sich über die ganze Länge der Windleiteinrichtung 22, 22'. Die Strömungsumlenkeinrichtung 22.1, 22.1' ist durch einen Innenraum der Windleiteinrichtung 22, 22' ausgebildet und derart ausgestaltet, dass der Luftstrom in der ersten Engstelle 22a, 22a' vorzugsweise um ca. 90 Grad umgelenkt wird.

Zur Lagerung der Windradeinrichtung 14, 14' weist die Windradeinrichtung 14, 14' eine quer zu einer Strömungsrichtung X, X' angeordnete Achseinheit 14.2, 14.2', zwei Lagerstellen 26.1, 26.2 zur Lagerung der Achseinheit 14.2, 14.2' und eine von der Gehäuseeinheit 18, 18' getrennt ausgeführten Ständereinheit 28.1, 28.2 auf, an der die Lagerstellen 26.1, 26.2 angeordnet sind. Dabei ist die Ständereinheit 28.1, 28.2 fest mit der Bodenplatte 24, 24' verbunden und innerhalb eines von dem Deckel 18.1, 18.1' umspannten Raumes angeordnet.

Die Achseinheit 14.2, 14.2' ist im vorliegenden Ausführungsbeispiel drehfest in den Lagerstellen 26.1, 26.2 gelagert und dient als Lagerstelle für die Generatoreinrichtung 16, 16' sowie für die drehbaren blättertragenden Blattaufnahmescheiben 36.1, 36.1', 36.2, 36.2', 36.3, 36.3'. Die Generatoreinrichtung 16, 16' weist eine Statoreinheit 16.1, 16.1' auf, die drehfest auf der Achseinheit 14.2, 14.2' angeordnet ist und Ankerelemente 16.2, 16.2' bzw. Rotorelemente 16.2, 16.2', die fest mit der Blattaufnahmescheibe 36.1, 36.1' verbunden sind.

In vorteilhafter Weise weist die Gehäuseeinheit 18, 18' eine Lagereinheit auf, durch die der Deckel 18.1, 18.1' schwenkbar mit der Bodenplatte 24, 24' verbunden ist. Die hier nicht näher dargestellte Lagereinheit kann in einem Randbereich des Deckels 18.1, 18.1' angeordnet sein und bei Wartungsarbeiten oder bei Reparaturarbeiten den Zugang zur Windradeinrichtung 14, 14' durch Öffnen des Deckels 18.1, 18.1' ermöglichen.

Die Windkraftanlage 10, 10' weist ein elektrisches Kabel 30 zur Anbindung an die Generatoreinrichtung 16, 16' auf, wobei die Achseinheit 14.2, 14.2' der Windradeinrichtung 14, 14' zumindest teilweise als rohrförmiger Hohlkörper ausgeführt ist, der das Kabel 30 zumindest teilweise aufnimmt. Eine an die Windkraftanlage 10, 10' angeschlossene Generatoreinrichtung 16, 16' wandelt die durch den Luftstrom erzeugte Rotationsbewegung des Laufrads 14.1, 14.1' der Windradeinrichtung 14, 14' in elektrische Energie um.

In vorteilhafter Weise kann die Windkraftanlage 10, 10' als ein Verkleidungselement des Daches 12, 12' ausgeführt sein. Eine vorhandene Außenfläche von Gebäuden, insbesondere der Dachbereich, kann als integraler funktionaler Bestandteil der Windkraftanlage 10, 10' genutzt werden. Die geschlossen ausgeführte Windkraftanlage 10, 10' kann in Farbe und Form der Dachkonstruktion oder der Hauskonstruktion angepasst und besonders vorteilhaft in die Gebäudestruktur, insbesondere von Spitzdächern, integriert werden, da durch eine Kapselung der Windradeinrichtung 14, 14' Schallemissionen und Schattenemissionen deutlich verringert werden können.

### Bezugszeichen

- 10, 10': Windkraftanlage
- 12, 12': Dach
- 12.1, 12.1': Dachlattung
- 14, 14': Windradeinrichtung
- 14.1, 14.1': Laufrad
- 14.2, 14.2': Achseinheit
- 14.3, 14.3': Blatt (Windradeinrichtung)
- 16, 16': Generatoreinrichtung
- 16.1, 16.1': Statoreinheit
- 16.2, 16.2': Ankerelemente / Rotorelemente
- 18, 18': Gehäuseeinheit
- 18.1, 18.1': Deckel
- 18.2, 18.2': Seitenwand
- 18.3, 18.3': Seitenwand
- 20, 20': Einströmbereich
- 22, 22': Windleiteinrichtung
- 22a, 22a': erste Engstelle
- 22b, 22b': zweite Engstelle
- 22c, 22c': dritte Engstelle
- 22.1, 22.1': Strömungsumlenkeinrichtung
- 22.2, 22.2': Strömungsumlenkeinrichtung
- 22.3, 22.3': Strömungsumlenkeinrichtung
- 24, 24': Bodenplatte
- 26.1: Lagerstelle
- 26.2: Lagerstelle
- 28.1: Ständereinheit
- 28.2: Ständereinheit
- 30: elektrisches Kabel
- 32, 32': Ausströmbereich
- 34a: Gitter
- 36.1, 36.1': Blattaufnahmescheibe
- 36.2, 36.2': Blattaufnahmescheibe
- 36.3, 36.3': Blattaufnahmescheibe
- X, X': Strömungsrichtung

## Patentansprüche

1. Windkraftanlage (10, 10') zur Energiegewinnung für ein Dach (12, 12'), zumindest mit einer unter Wirkung eines Luftstroms betreibbaren Windradeinrichtung (14, 14'), mit einer durch die Windradeinrichtung (14, 14') angetriebenen Generatoreinrichtung (16, 16'), mit einer zumindest die Windradeinrichtung (14, 14') aufnehmenden Gehäuseeinheit (18, 18'), die einen der Windradeinrichtung (14, 14') vorgelagerten Einströmbereich (20, 20') zum Einströmen des Luftstroms aufweist und mit einer in der Gehäuseeinheit (18, 18') angeordneten Windleiteinrichtung (22, 22'),
**dadurch gekennzeichnet, dass**
die Windleiteinrichtung (22, 22') zumindest zwei Engstellen (22a, 22a', 22b, 22b', 22c, 22c') zur Erhöhung der Luftstromgeschwindigkeit ausbildet.

2. Windkraftanlage nach Anspruch 1,
**dadurch gekennzeichnet, dass** die Windleiteinrichtung (22, 22') in einem Einströmbereich (20, 20') und/oder einem Ausströmbereich (32, 32') der Gehäuseeinheit (18, 18') angeordnet ist.

3. Windkraftanlage nach Anspruch 1 oder 2,
**dadurch gekennzeichnet, dass**
die Windleiteinrichtung (22, 22') eine Strömungsumlenkeinrichtung (22.2, 22.2') aufweist, die den Einströmbereich (20, 20') oder den Ausströmbereich (32, 32') in die zwei Engstellen (22a, 22a', 22b, 22b') teilt.

4. Windkraftanlage nach einem der vorhergehenden Ansprüche,
**dadurch gekennzeichnet, dass**
die Gehäuseeinheit (18, 18') im Einströmbereich (20, 20') einen sich in Strömungsrichtung (X, X') verkleinernden Querschnift aufweist, der eine dritte Engstelle (22c, 22c') ausbildet, die entlang der Strömungsrichtung (X, X') vor den zwei Engstellen (22a, 22a', 22b, 22b') angeordnet ist, welche durch die den Einströmbereich (20, 20') oder den Ausströmbereich (32, 32') teilende Strömungsumlenkeinrichtung (22.2, 22.2') ausgebildet sind.

5. Windkraftanlage nach einem der vorhergehenden Ansprüche,
**dadurch gekennzeichnet, dass**
die Windleiteinrichtung (22, 22') in zumindest einer der Engstellen (22a, 22a', 22b, 22b') im Einströmbereich (20, 20') oder Ausströmbereich (32, 32') zur Umlenkung des Luftstroms um einen Winkel von zumindest 80 Grad vorgesehen ist.

6. Windkraftanlage nach einem der vorhergehenden Ansprüche,
**dadurch gekennzeichnet, dass**
die Windleiteinrichtung (22, 22') dazu vorgesehen ist, bei einer externen Luftstromgeschwindigkeit größer als 10 m/s einen turbulenten Luftstrom und/oder bei einer externen Luftstromgeschwindigkeit kleiner als 5 m/s einen nahezu laminaren Luftstrom im Einströmbereich (20, 20') zu bewirken.

7. Windkraftanlage nach einem der vorhergehenden Ansprüche,
**gekennzeichnet durch**
ein im Einströmbereich (20, 20') angeordnetes Gitter (34a), das zumindest zur Verwirbelung des Luftstroms bei einer externen Luftstromgeschwindigkeit größer als 10 m/s vorgesehen ist.

8. Windkraftanlage zumindest nach Anspruch 4,
**dadurch gekennzeichnet, dass**
die Gehäuseeinheit (18, 18') einen Deckel (18.1, 18.1') und die Windleiteinrichtung (22, 22') eine Strömungsumlenkeinrichtung (22.3, 22.3') aufweist, die in den Deckel (18.1, 18.1') integriert ist und den im Einströmbereich (20, 20') sich in Strömungsrichtung (X, X') verkleinernden Querschnitt ausbildet.

9. Windkraftanlage nach einem der vorhergehenden Ansprüche,
**dadurch gekennzeichnet, dass**
die Gehäuseeinheit (18, 18') eine Bodenplatte (24, 24') und die Windleiteinrichtung (22, 22') eine Strömungsumlenkeinrichtung (22.1, 22.1') aufweist, die an der Bodenplatte (24, 24') der Gehäuseeinheit (18, 18') angeordnet ist.

10. Windkraftanlage nach einem der vorhergehenden Ansprüche,
**dadurch gekennzeichnet, dass**
die Windradeinrichtung (14, 14') eine quer zu einer Strömungsrichtung (X, X') angeordnete Achseinheit (14.2, 14.2'), zwei Lagerstellen (26.1, 26.2) zur Lagerung der Achseinheit (14.2, 14.2') und eine von der Gehäuseeinheit (18, 18') getrennt ausgeführte Ständereinheit (28.1, 28.2) aufweist, an der die Lagerstellen (26.1, 26.2) angeordnet sind.

11. Windkraftanlage zumindest nach den Ansprüchen 8 und 10,
**dadurch gekennzeichnet, dass**
die Ständereinheit (28.1, 28.2) innerhalb eines von dem Deckel (18.1, 18.1') umspannten Raumes angeordnet ist.

12. Windkraftanlage zumindest nach den Ansprüchen 8 und 9,
**dadurch gekennzeichnet, dass**
die Gehäuseeinheit (18, 18') eine Lagereinheit aufweist, durch die der Deckel (18.1, 18.1') schwenkbar mit der Bodenplatte (24, 24') verbunden ist.

13. Windkraftanlage nach einem der vorhergehenden Ansprüche,
**gekennzeichnet durch**
ein elektrisches Kabel (30) zur Anbindung an die Generatoreinrichtung (16, 16'), wobei die Achseinheit (14.2, 14.2') der Windradeinrichtung (14, 14') zumindest teilweise als rohrförmiger Hohlkörper ausgeführt ist, der das Kabel (30) zumindest teilweise aufnimmt.

14. Windkraftanlage nach einem der vorhergehenden Ansprüche,
**dadurch gekennzeichnet, dass**
die Windradeinrichtung (14, 14') als Ossberger-Turbine ausgeführt ist.

15. Windkraftanlage nach einem der vorhergehenden Ansprüche, die als ein Verkleidungselement des Daches (12, 12') ausgeführt ist.
